# EUROPEAN PATENT SPECIFICATION

(11) **EP 3 685 627 B1**
(45) Date of publication and mention of the grant of the patent: **20.10.2021**
(21) Application number: 17781013.2
(22) Date of filing: 20.09.2017
(51) Int. Cl.: H04W 80/00

(54) **IMPLEMENTING EDGE NETWORK SERVICES AT ACCESS ELEMENTS FOR MOBILE EDGE COMPUTING**
IMPLEMENTIERUNG VON EDGE-NETZWERK-DIENSTEN AN ZUGANGSELEMENTEN FÜR MOBIL-EDGE-COMPUTING
MISE EN OEUVRE DE SERVICES DE RÉSEAU EDGE AU NIVEAU D'ÉLÉMENTS D'ACCÈS POUR UNE INFORMATIQUE EDGE MOBILE

(43) Date of publication of application: 29.07.2020
(73) Proprietor: Nokia Technologies Oy, 02610 Espoo (FI)
(72) Inventor: AGARWAL, Salil, Bangalore Karnataka 560093 (IN); KANICHU VEEDU, Sudhish, Bangalore Karnataka 560076 (IN)
(74) Representative: Nokia EPO representatives
(86) International application number: PCT/EP2017/073691
(87) International publication number: WO 2019/057268

(56) References cited:
- WO-A1-2016/137463
- HUANG ANTA ET AL: "Low latency MEC framework for SDN-based LTE/LTE-A networks", 2017 IEEE INTERNATIONAL CONFERENCE ON COMMUNICATIONS (ICC), IEEE, 21 May 2017 (2017-05-21), pages 1-6, XP033132215, DOI: 10.1109/ICC.2017.7996359 [retrieved on 2017-07-28]
- PENCHEVA EVELINA ET AL: "Mobile edge computing services for dynamic quality of service control", 2017 20TH CONFERENCE OF OPEN INNOVATIONS ASSOCIATION (FRUCT), FRUCT, 3 April 2017 (2017-04-03), pages 365-370, XP033226559, DOI: 10.23919/FRUCT.2017.8071335 [retrieved on 2017-10-18]

## Description

### BACKGROUND

Wireless communication systems implement mobile-edge computing (MEC) to provide computing capabilities in relatively close proximity to user equipment (UE). The MEC architecture typically includes an access element (which can also be referred to as an access node) and an edge network that supports a MEC platform that provides a hosting infrastructure and an application platform. The hosting infrastructure includes hardware resources and a virtualization layer. The application platform provides capabilities for hosting applications and the application's virtualization manager and application platform services. The edge network supports an interface to a core network, which supports interfaces to a subscriber database and a packet data network gateway (PGW) to an external network such as the Internet.

Radio network information services (RNIS) are implemented in the edge network. The RNIS can provide information relating to the user equipment to applications implemented at the edge network. Examples of the information provided by the RNIS include indications of activation of the UE, parameters of the UE context, and parameters of a radio access bearer established for the UE such as a Quality-of-Service (QoS) class identifier (QCI), cell identifiers for the UE, an identifier of a logical connection to the UE *(e.g.,* a tunnel identifier), and the like. The applications implemented in the edge network can use the information provided by the RNIS, potentially in combination with the information acquired by monitoring user plane traffic, to provide services. For example, the edge network can support a throughput guidance service that generates an indication of bandwidth available between the access element and the UE, such as a 16-bit integer value that represents a number of kilobytes per second (kB/s) of available bandwidth. Throughput guidance can be used in transmission control protocol (TCP) congestion control techniques, *e.g*., to improve delivery of video over TCP connections.

Patent application WO2016/137463 A1 discloses a base station integrating edge services based on radio parameters.

### SUMMARY OF EMBODIMENTS

The invention is defined by the independent claims. Further detailed embodiments are defined in the dependent claims.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram of a wireless communication system that implements a throughput guidance service in an edge network.
FIG. 2 is a block diagram of a wireless communication system that implements an edge service at an access element according to some embodiments.
FIG. 3 is a block diagram of an entry in a service registry according to some embodiments.
FIG. 4 is a block diagram of a wireless communication system that is configured to perform hand off of a source throughput guidance (TG) service in a source access element to a target TG service in a target access element according to some embodiments.
FIG. 5 is a block diagram of a wireless communication system that implements an application that is hosted in an edge network according to some embodiments.
FIG. 6 is a block diagram of a wireless communication system that implements out-of-band reporting of throughput guidance according to some embodiments.
FIG. 7 is a block diagram of an NFV architecture according to some embodiments.

### DETAILED DESCRIPTION

Implementing mobile-edge computing (MEC) services, such as throughput guidance, in the edge network has a number of drawbacks. Layer 1 and layer 2 parameters that are measured or generated in the access element are not typically available to the services implemented in the edge network. Conveying the layer 1 and layer 2 parameters from the access element to the edge network in real time generates significant signaling overhead that can become a bottleneck in the interface between the access element and the edge network. Thus, services implemented in the edge network are not provided with real-time access to values of the layer 1 and layer 2 parameters associated with users, bearers, or service flows, which can reduce the accuracy or usefulness of the service. Values of the layer 1 and layer 2 parameters can be aggregated for transmission from the access element to the edge network at periodic intervals (i.e., not in real time) but in this case the values of the parameters become stale before they are available to the services implemented in the edge network. For example, layer 1 or layer 2 parameters such as hybrid automatic repeat request (HARQ) retransmission parameters, physical resource block (PRB) allocations to downlink transmission, and L2 buffer occupancies are dynamic and can change on timescales as short as a transmission time interval (TTI), which can be one millisecond or shorter.

Services such as MEC services are given access to layer 1 and layer 2 parameters by implementing an edge service in an access element and registering the edge service in a registry that is accessible to an edge service agent implemented in an edge network or a centralized location such as a core network. Registering the edge service includes registering the edge service as an endpoint indicated by one or more of an Internet Protocol (IP) address, a port, a protocol, or a universal resource locator (URL). Registering the edge service also includes registering discovery criteria for the edge service such as a cell identifier. The edge service is therefore discoverable by the edge service agent, *e.g*., using the cell identifier associated with the user equipment receiving the service. The edge service agent determines whether a user, a bearer, or an IP flow qualifies for the service. Some embodiments of the edge service agent make this determination based on an international mobile subscriber identity (IMSI) retrieved from a User Identity Service (UIS) or other shared data repository, an identifier of a radio access bearer retrieved from an RNIS, an IP address of the endpoint of the IP flow, or an identifier that represents a complete IP 5-tuple. In response to determining that the user, bearer, or IP flow qualifies for the service, the edge service agent instructs the access element to activate the edge service by providing information indicative of the user, bearer, or flow to the access element. The edge service agent can configure parameters for providing the edge service, such as parameters indicating whether the service reports results "in-band" as part of the uplink or downlink traffic flow or "out-of-band" to the edge service agent. The edge service agent forwards the "out-of-band" information using a separate connection to an application that is utilizing the edge service. The edge service agent can also configure a reporting frequency for the edge service.

Once activated, the edge service is provided based on real-time layer 1 and layer 2 parameters available at the access element. For example, a throughput guidance service can generate estimates of available bandwidth based on HARQ retransmission parameters, PRB allocations to downlink transmission, L2 buffer occupancies, or other parameters, which can be specific to the edge service. The throughput guidance can also utilize higher-level parameters such QCI values, cell identifiers for the radio access bearer, tunnel identifiers, information acquired by monitoring user plane traffic, and the like. Some embodiments of the edge service provide the results "in-band" by inserting the results into the uplink traffic flow. For example, a throughput guidance service can encode bandwidth estimates in headers of packets such as transmission control protocol (TCP) acknowledgment packets or the throughput guidance service can provide the bandwidth estimates to the edge service agent "out-of-band." The edge service agent can provide the throughput guidance that is received "out-of-band" to an authorized application server e.g. using a secure HTTPS. Edge service parameters can be handed off from a source access element to a target access element in response to handover of the corresponding user equipment. For example, a transparent container can be used to convey edge service parameters from the source access element to the target access element prior to handover of the user equipment so that the target access element is configured to provide the edge service as soon as the user equipment has handed over.

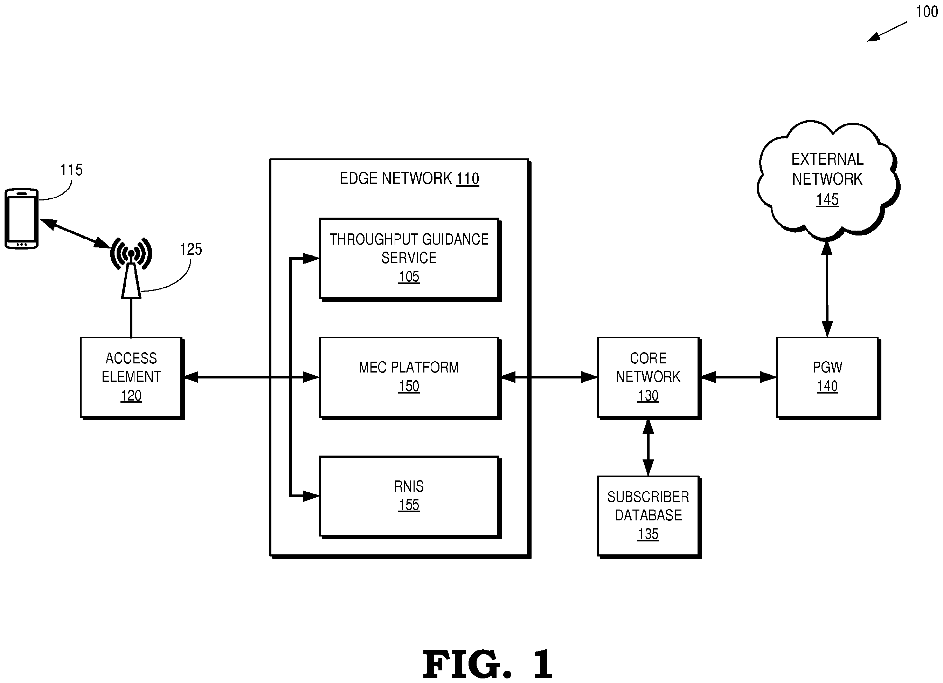

FIG. 1 is a block diagram of a wireless communication system 100 that implements a throughput guidance service 105 in an edge network 110. The wireless communication system 100 provides wireless connectivity to one or more user equipment 115 within a geographical area or cell that is served by a corresponding access element 120 via one or more antennas 125. The access element 120 and the antennas 125 can be disposed proximate each other or the antennas 125 can be deployed at a distance from the access element 120, *e.g.,* as one or more remote radio heads. The access element 120 communicates with a core network 130 via the edge network 110. In some embodiments, the edge network 110 is implemented external to the access element 120, *e.g.,* in a different physical entity or as different hardware that is connected to the access element 120 by an interface. The access element 120 can be implemented as different devices that are referred to using different terms depending on the radio access technology used to implement the access element 120. For example, an access element 120 that is implemented according to Long Term Evolution (LTE) standards is referred to as an eNodeB. For another example, an access element 120 that is implemented according to Fifth Generation (5G) standards is referred to as a gigabyte node B (gNB).

The core network 130 provides functionality such as aggregation of packets received from user equipment including the user equipment 115, service authentication, call control/switching, charging, and the like. Some embodiments of the core network 130 implement gateways including a service gateway (SGW) to handle user plane traffic and a mobility management entity (MME) to handle control plane traffic. A subscriber database 135 includes subscriber profiles that can be used to perform authentication and authorization of users. A public data network (PDN) gateway (PGW) 140 provides a gateway between the core network 130 and an external network 145, such as the Internet.

The edge network 110 implements a mobile edge computing (MEC) platform 150 that is disposed in line between the access element 120 and the core network 130. Uplink and downlink traffic flows between the access element 120 and the core network 130 are therefore conveyed via the MEC platform 150. For example, downlink packets addressed to the access element 120 are conveyed from the core network 130 to the access element 120 via the MEC platform 150. For another example, uplink packets transmitted by the user equipment 115 are conveyed from the access element 120 to the MEC platform 150 and, if the packets are addressed to an entity such as an application connected to the external network 145, the MEC platform 150 forwards the packets to the core network 130.

A radio network information service (RNIS) 155 provides authorized applications with radio and network information. Some embodiments of the RNIS 155 provide indications relating to activation of the user equipment 115 on the access element 120. For example, the parameters can include parameters such as a subscriber profile identifier (SPID) that identifies a profile or a context of the user equipment 115. For another example, the parameters can include parameters that define an established radio access bearer such as a quality-of-service (QoS) class identifier (QCI), a cell identifier for the radio access bearer, an identifier of a logical connection to the user equipment 115 *(e.g.,* a tunnel identifier), and the like. Some embodiments of the RNIS 155 store information or generate signals indicating when the radio access bearer is modified or released, as well as when the context for the user equipment 115 changes. The RNIS 155 can also store and provide measurement and statistical information related to user plane traffic at the cell and bearer level, such as information indicating a cell load, congestion, performance measurements performed by the user equipment 115, and handover events. Some embodiments of the RNIS 155 are implemented in accordance with MEC standards defined by European Telecommunications Standards Institute (ETSI).

The throughput guidance service 105 generates throughput guidance based on information available in the edge network 110. The information can include control plane information or user plane information. In some embodiments, the RNIS 155 provides control plane information related to the radio access bearer such as QCI information, a tunnel identifier, or a cell identifier. The throughput guidance service 105 can also access information related to uplink or downlink user plane traffic that is flowing through the edge network 110 such as uplink or downlink packets that are conveyed between the access element 120 and the core network 130. The throughput guidance can be represented as values of a set of bits, *e.g.* as a 16-bit integer value that indicates the value of the throughput guidance in kilobytes per second.

The throughput guidance service 105 transmits values of the throughput guidance to entities such as applications implemented in the wireless communication system 100. Some embodiments of the throughput guidance service 105 transmit the throughput guidance "in-band" to an application server in the uplink direction by encoding the value of the throughput guidance into a header of a TCP acknowledgment packet. The application server can then use the value of the throughput guidance to control a TCP flow in the downlink direction such as a TCP flow that provides packets for a video stream to the user equipment 115. The throughput guidance service 105 can also provide values of the throughput guidance "out-of-band" using a separate connection between the throughput guidance service 105 and an application that utilizes the throughput guidance. For example, a different connection than the connection used to transmit the uplink or downlink traffic between the access element 120 and an external application in the external network 440 can be used to convey the out-of-band values of the throughput guidance to the external application. For another example, a separate connection can be used to transmit the throughput guidance out-of-band to a local application implemented in the edge network 445.

As discussed herein, the throughput guidance service 105 does not have access to real-time layer 1 or layer 2 parameters that are available in the access element 120. Examples of layer 1 or layer 2 parameters include hybrid automatic repeat request (HARQ) retransmission parameters, physical resource block (PRB) allocations to downlink transmission, and L2 buffer occupancies. The layer 1 and layer 2 parameters are generated in the access element 120 during communication over the air interface with the user equipment 115. Conveying the layer 1 and layer 2 parameters from the access element 120 to the edge network 110 can generate undesirable bottlenecks in the interface between the access element 120 and the edge network 110. The access element 120 could aggregate values of the layer 1 and layer 2 parameters and subsequently transmit the aggregated values to the edge network 110. However, the aggregated values of the parameters would likely become stale before they are available to the throughput guidance service 105.

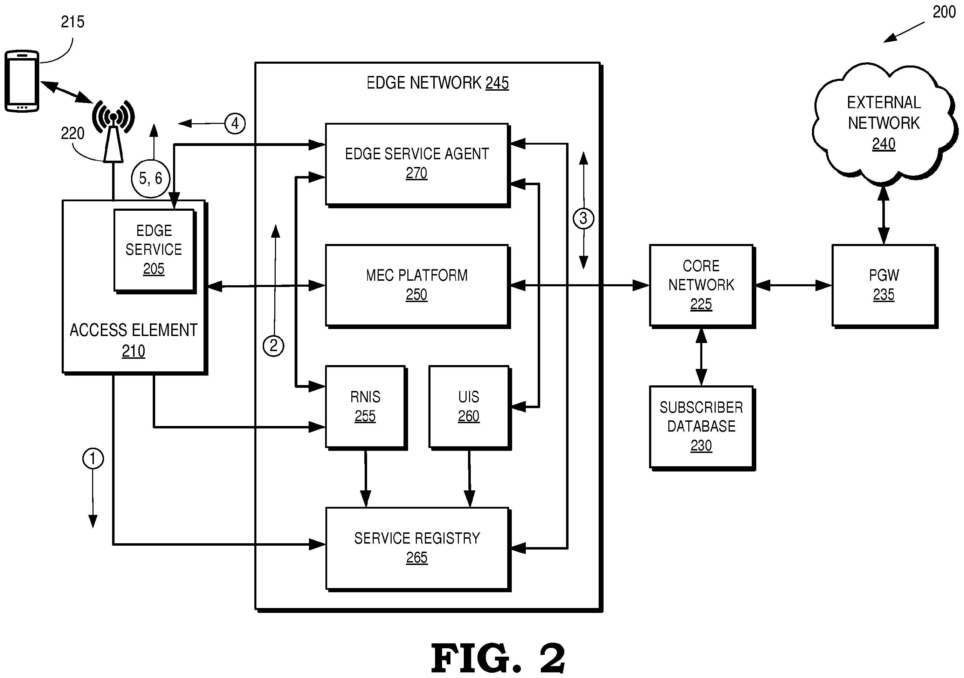

FIG. 2 is a block diagram of a wireless communication system 200 that implements an edge service 205 at an access element 210 according to some embodiments. The wireless communication system 200 provides wireless connectivity to one or more user equipment 215 within a geographical area or cell that is served by the access element 210 via one or more antennas 220, which can be disposed proximate to or at a distance from the access element 220, *e.g.,* as one or more remote radio heads. The wireless communication system 200 also includes a core network 225, a subscriber database 230, and a PGW 235 that provides a gateway to an external network 240 such as the Internet. The access element 210 communicates with the core network 225 via an edge network 245. The access element 210 can be referred to an eNodeB, a gNB, or using other terms depending on the radio access technology that is implemented by the access element 210.

The edge network 245 implements an MEC platform 250 that is disposed in line between the access element 210 and the core network 225 and therefore conveys uplink and downlink traffic between the access element 210 and the core network 225. The edge network 245 also implements an RNIS 255 that stores and provides radio network information such as the information discussed herein with regard to the RNIS 155 shown in FIG. 1. Some embodiments of the edge network 245 implement a user identity service (UIS) 260 that can provide a secure user identity to the RNIS 255. The UIS 260 stores an actual user identity such as an international mobile subscriber identity (IMSI) of the user equipment 215 but does not provide this identity to applications. Instead, the UIS 260 provides a secure user identity that is uniquely mapped to the IMSI of the user equipment 215. Embodiments of a user identity service are disclosed in the related application entitled "EDGE COMPUTING,".

The wireless communication system 200 differs from the wireless communication system 100 shown in FIG. 1 because the edge service 205 is implemented in the access element 210 instead of being implemented in the edge network 245. Implementing the edge service 205 in the access element 210 allows the edge service 205 to access layer 1 and layer 2 parameters in real time, which allows the edge service 205 to improve the accuracy and usefulness of service results generated by the edge service 205. The edge service 205 can use the real-time layer 1/layer 2 parameters to generate service results for a user *(e.g.,* the user equipment 215), a radio access bearer that is terminated by the user equipment 215, or a flow that is supported by the radio access bearer. The service results can then be provided to applications such as applications providing video content to the user equipment 215.

The edge service 205 is registered with a service registry 265 that can be implemented in the edge network 245. The service registry 265 can also be implemented in other locations that are accessible to the entities implemented in the edge network 245. Some embodiments of the edge service 205 register with the service registry 265 by providing information identifying an endpoint of the service, such as an IP address, a port number, a protocol, or a universal resource locator (URL), as well as a discovery criteria such as a cell identifier. The service registry 265 stores this information so that the edge service 205 becomes discoverable by an edge service agent 270 that is implemented in the edge network 245. The edge service agent 270 is then able to set service-specific configuration parameters to configure the edge service 205 to execute service-specific computations and generate service results. For example, computing throughput guidance requires that the edge service 205 be configured with bearer identities or identifiers of traffic flows that utilize the throughput guidance. The edge service 205 performs a computational algorithm and other tasks (e.g., inserting or enriching packets in a traffic load to include the service results in the packets for in-band reporting). The edge service 205 can consider throughput at the radio access bearer, IP flow, or cell level, as well as dynamic radio parameters available at the access elements 210 such as HARQ retransmission parameters, PRB allocations, and buffer occupancies.

The edge service 205 interacts with the edge service agent 270 to access information indicating the radio access bearer or IP flow that uses results generated by the edge service 205. Some embodiments of the edge service 205 can also access other service-specific parameters such as a reporting criteria for reporting the service results, a reporting frequency, and the like from the edge service agent 270. In the event that the user equipment 220 hands off from the access element 210 to a target access element (not shown in FIG. 2), the edge service 205 interacts with the target access element by exchanging service specific parameters as part of a handover preparation procedure. In some embodiments, the service-specific parameters are exchanged in a "transparent container," as discussed herein. A target edge service can then be established in the target access element using the service-specific parameters to provide service continuity to the user, radio access bearer, or flow during and after the handover.

The edge service agent 270 is responsible for controlling the overall services provided at the edge of the network, including the edge service 205. In some embodiments, more than one edge service agent is implemented in the edge network 245 to support different edge services. For example, if the access element 210 supports multiple edge services, the edge network 245 can implement a single edge service 270 to support all of the edge services supported by the access element 210 or the edge network 245 can implement a separate edge service agent for each edge service supported by the access element 210. The edge service agent 270 is also able to control other edge services that may be implemented in the access element 210 or other access elements that are connected to the edge network 245. The edge service agent 270 is configured to determine whether a user, radio access bearer, or IP flow is qualified to receive the edge service 205. For example, the edge service agent 270 can perform qualification of a user based on an IMSI provided by the UIS 260, a radio access bearer based upon a SPID provided by the RNIS 255, or an IP flow based upon an IP address of the endpoint at the user equipment 215. The edge service agent 270 also generates service-specific parameters that are provided to configure the edge service 205 and reporting criteria for the edge service 205 such as reporting time intervals or events that trigger reporting of the service results.

Publishing of the service results to other entities (such as application servers connected to the external network 240) is performed by the edge service agent 270. Some embodiments of the edge service agent 270 are also configured to authorize or authenticate the entities that receive the service results. The edge service agent 270 can receive information defining the reporting frequency of service results from an application that is utilizing the edge service 205. The edge service agent 270 can also receive information indicating whether the edge service 205 is to report the service results "in-band" by encoding the results in headers of uplink data packets (which are referred to as enriched packets) transmitted to the edge network 245 or "out-of-band" using other messages (e.g., packets that are not part of the uplink data flow and are not transmitted along the connection used to convey packets in the uplink data flow) that are transmitted using a different connection. Information that is used to configure or implement out-of-band signaling can be exposed to over-the-top (OTT) applications that are outside a domain of an operator of the wireless communication system 100.

The edge service agent 270 is able to discover the edge service 205 using information in the service registry 265. In some embodiments, the edge service agent 270 discovers the edge service 205 in response to establishment of a radio access bearer terminated by the user equipment 215, in response to establishment of a new flow supported by the radio access bearer, or in response to other triggers. Discovery is performed on the basis of service-specific discovery criteria that are stored in the service registry 265 during registration of the edge service 205. For example, an edge service 205 that provides throughput guidance can be discovered on the basis of a cell identifier associated with the access element 210 that is serving the user equipment 215 in the cell indicated by the cell identifier. The edge service agent 270 also interacts with other entities implemented in the edge network 245. For example, the edge service agent 270 can interact with the RNIS 255 to access a serving cell identifier, events associated with the radio access bearer, characteristics of the radio access bearer such as the SPID. For another example, the edge service agent 270 can interact with the UIS 260 to access a user identifier *(e.g.,* the IMSI) or a user profile. This information can be used to determine whether a user, bearer, or flow qualifies for the edge service 205.

The edge service agent 270 is also configured to provide information to configure the edge service 205. For example, the edge service agent 270 can provide information instructing the edge service 205 to activate the service for one or more users, one or more radio access bearers, or one or more data flows supported by the radio access bearers. For example, the edge service agent 270 can provide at least one identifier of at least one user, radio access bearer, or data flow to instruct the edge service 205 to activate a corresponding edge service. Some embodiments of the edge service agent 270 also provide information to configure the edge service 205 to report service results "in-band" or "out-of-band." In cases where the edge service 205 is configured to report service results out-of-band, the edge service agent 270 can interact with authorized external entities to provide information used to configure the out-of-band connection between the edge service 205 and the authorized external entities. The edge service agent 270 can also provide information to configure a frequency for reporting the service results from the edge service 205.

In the interest of clarity, a specific implementation of the edge service 205 and the edge service agent 270 is described below in the context of a throughput guidance service. However, the following description applies equally to other edge services such as services that estimate cell loading, cell congestion, timing advances, and the like using the layer 1 and layer 2 parameters that are available in the access element 210.

The edge service agent 270, which can be referred to as a throughput guidance agent, is deployed at the edge network 245. The edge service agent 270 maintains a list of criteria for the radio access bearers and users that qualify to receive throughput guidance from the edge service 205. For example, qualification criteria can include values of an SPID, a user identity such as an IMSI, or user profile. Qualification criteria for IP flows to utilize throughput guidance include a 5 tuple. For example, the 5 tuple can include a source IP subnet, a destination IP subnet, the protocol type or next protocol, a source port range, a destination port range, and a type of service/differential services code point. The edge service agent 270 can then interact with the edge service 205 to implement throughput guidance for qualified users, radio access bearers, or flows. The edge service agent 270 can also be configured to receive out-of-band throughput guidance that is then forwarded to an application server.

The edge service 205, which can be referred to as a throughput guidance service, resides in the access elements 210 and is configured to calculate throughput guidance. The calculation can be performed on the basis of real time parameters available inside the access elements 210. The throughput guidance calculated by the edge service 205, as well as other events, are reported to the edge service agent 270 on a per bearer or perflow level. The reports can be provided periodically at a frequency configured by the edge service agent 270, in response to particular events, or at other time intervals.

In operation, the edge service 205 computes and provides throughput guidance as follows. At step 1, the access element 210 registers the edge service 205 with the service registry 265. Registration includes providing a message including information identifying the endpoint that exposes interfaces to the edge service 205. The endpoint information can include an IP address, a port, a protocol, and the like. Registration also includes providing discovery criteria such as one or more cell identifiers. Registration also includes providing a URL that is used to access the edge service 205 and identifiers of the cells that are supported for throughput guidance, such as an E-UTRAN cell global identifier (ECGI).

At step 2, a radio access bearer is established. The RNIS 255 notifies the edge service agent 270 in response to establishment of the radio access bearer. The notification can include one or more cell identifier such as the ECGIs for the access element 210 that is serving the radio access bearer. In some embodiments, the edge service agent 270 queries the RNIS 255 to access this information. The edge service agent 270 can then determine whether the radio access bearer qualifies for throughput guidance, *e.g*., based on the SPID. The edge service agent 270 can also query the UIS 260 to access a user identifier or user profile, which can then be used as qualification criteria for the throughput guidance service.

At step 3, the edge service agent 270 queries the service registry 265 to determine if the throughput guidance service is available for a cell corresponding to the cell identifier that is serving the user or radio access bearer. If available, the service registry 265 provides information indicating that the service is available at an endpoint and providing information identifying the endpoint.

At step 4, the edge service agent 270 transmits a request to the edge service 205 *(e.g.,* over a RESTful interface such as HTTPS POST) to have the edge service 205 provide throughput guidance for the radio access bearer, which can be identified by a tunnel identifier. The request can also include identifiers of one or more IP flows that can be provided with throughput guidance. For example, the request can include tunnel identifiers for a radio access bearers and identifiers of the IP flows that receive the throughput guidance. The IP flow information can include a 5-tuple of the flow that indicates a source IP subnet, a destination IP subnet, a protocol, a source port range, a destination port range, and a type of service/differential services code point. The request can also include information indicating a periodicity of reporting of the throughput guidance, as well as an indication of the throughput guidance reporting mode, *e.g.,* in-band, out-of-band, or both. In cases where throughput guidance is provided for all IP flows at the bearer level, only the identifier of the radio access bearer is necessary and the request does not need to include details for the IP flows supported by the radio access bearer. Calculation of the throughput guidance value is done at the bearer level and in-band enrichment is performed on the IP flows, as discussed herein.

At step 5, the edge service 205 is configured based on the information received from the edge service agent 270. The edge service 205 can then begin performing throughput guidance calculations for the radio access bearer (or the IP flows supported by the radio access bearer). If the edge service 205 is configured to perform in-band signaling of throughput guidance, the edge service 205 identifies the uplink IP flows that are using throughput guidance and enriches the uplink packets with throughput guidance. For example, the edge service 205 can encode values representative of the throughput guidance into a header of an uplink TCP acknowledgment packet. The enriched uplink packets are then transmitted to the application server. If the edge service 205 is configured to perform out-of-band signaling of throughput guidance, the edge service reports a value representative of the throughput guidance to the edge service agent 270.

At step 6, the edge service 205 provides reports to the edge service agent 270 on a per-user or per-bearer or per IP flow depending on how edge service reporting is configured. They report includes information related to throughput guidance such as a timestamp, tunnel identifiers of the radio access bearer, throughput guidance values for flows that are identified by information provided in the original request, indications of uplink and downlink throughput for the radio access bearer, a value of throughput guidance for the radio access bearer if throughput guidance is calculated for all of the IP flows supported by the radio access bearer, and the like. The edge service 205 can provide the reports periodically or in response to a request from the edge service agent 270.

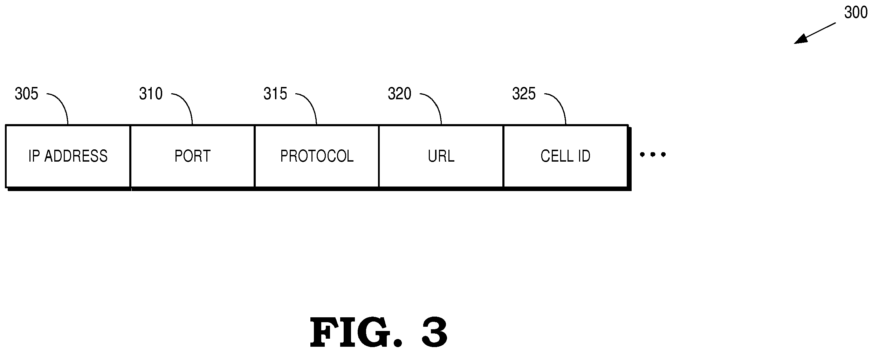

FIG. 3 is a block diagram of an entry 300 in a service registry according to some embodiments. The entry 300 represents an entry in some embodiments of the service registry 265 shown in FIG. 2. The entry 300 is configured in response to the service registry receiving a registration from an access element such as the access element 210 shown in FIG. 2. The registration is used to register an edge service such as the edge service 205 shown in FIG. 2. In the illustrated embodiment, the entry includes an IP address 305, a port 310, a protocol 315, a URL 320 that is used to access the edge service, and an identifier 325 of a serving cell such as an ECGI. Although four parameters are shown in the entry 300, the entry 300 can include more or fewer parameters in other embodiments.

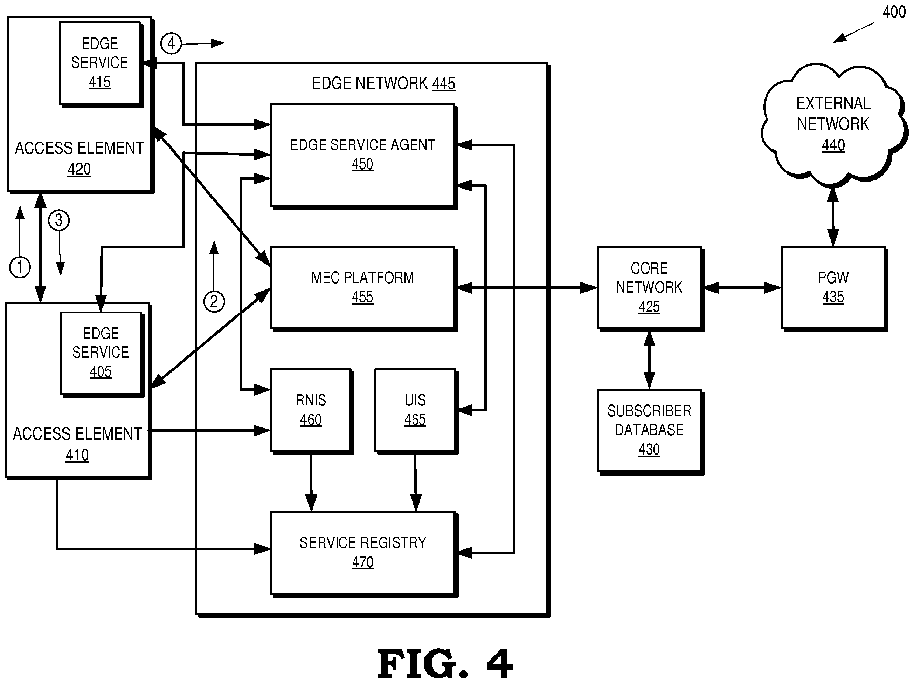

FIG. 4 is a block diagram of a wireless communication system 400 that is configured to perform hand off of a source edge service 405 in a source access element 410 to a target edge service 415 in a target access element 420 according to some embodiments. Although the description of FIG. 4 uses throughput guidance as an example of an edge service, the description applies equally to other edge services that can be implemented in the access elements 410, 420. The wireless communication system 400 also includes a core network 425, a subscriber database 430, and a PGW 435 that provides a gateway to an external network 440 such as the Internet. The access elements 410, 420 communicate with the core network 425 via an edge network 445, which implements a TG service agent 450, and MEC platform 455, an RNIS 460, a UIS 465, and a service registry 470. These entities operate in the manner disclosed herein with regard to corresponding entities in the wireless communication system 200 shown in FIG. 2.

User equipment (not shown in FIG. 4) can be handed off between the source access element 410 and the target access element 420. The following message flow is used to provide service continuity for throughput guidance provided by the TG services 405, 415 during and after the handover. In the illustrated embodiment, the (source) edge service 405 has been configured to provide throughput guidance for the user, one or more radio access bearers, and one or more IP flows supported by the radio access bearers.

At step 1, the source access element 410 determines that a handover of the user equipment is required, *e.g*., based on reported values of measurements of strengths of signals received by the user equipment from the source access element 410 and the target access element 420. The user equipment transmits a handoff preparation message to the target access element 420 to indicate that a handover is going to occur. In addition to conventional handoff parameters, such as those specified by 3GPP standards, the handoff preparation message includes additional information related to the TG service. The edge-service-specific information can be placed in a "transparent container" that includes a type of the service (throughput guidance, in this case), a list of tunnel identifiers of the radio access bearers that are receiving throughput guidance, and a list of the IP flows that are receiving throughput guidance. The list of the IP flows can include an identifier of the IP flow, a 5-tuple for the IP flow, a current value of the throughput guidance at the IP flow level, and an indication of the throughput guidance mode, *e.g*., in-band, out-of-band, or both. The edge-service-specific information also includes a current value of the throughput guidance and the uplink/downlink throughput at the radio access bearer level (in cases in which only bearer level throughput guidance is configured), an endpoint that provides reporting to the TG service agent 450, and information indicating a periodicity of reporting to the TG service agent 450.

At step 2, the TG service agent 450 accesses information in preparation for handover from the RNIS 460. The RNIS 460 can provide a notification including information such as an identifier of the target access element 420 in response to receiving a handover indication from the target access element 420. The RNIS 460 can also (or alternatively) provide a mechanism that allows the TG service agent 450 to query the RNIS 460 for this information. The TG service agent 450 can query the service registry 470 based on an identifier of the target access element 420 (such as an ECGI) to determine whether the edge service 415 is available at the target access element 420.

If the edge service 415 is available, step 3 is performed. At step 3, the target access element 420 accepts the edge-service-specific information , *e.g.,* the information provided in the transparent container by the source access element 410. The target access element 420 can acknowledge receipt of the edge-service-specific information from the source access element 410. The target access element 420 configures the edge service 415 using the information received from the source access on 410 in the transparent container. Once the edge service 415 has been configured, the edge service 415 begins computing values of throughput guidance. The throughput guidance can be encoded into the first uplink packet received from the user equipment if the edge service 415 is configured to provide in-band enrichment. Thus, service continuity is insured during and after handover of the user equipment to the target access element 420.

At step 4, the target access element 420 begins reporting to the TG service agent 450. Reporting can be performed periodically or in response to a request from the TG service agent 450.

If the edge service 415 is not available, steps 3 and 4 are not performed. Instead, the target access element 420 rejects the edge-service-specific information provided in the transparent container by the source access element 410. For example, the target access element 420 can provide a negative acknowledgment to the source access element 410. In response to receiving the rejection of the edge-service-specific information, the edge service 405 in the source access element 410 can provide a message to the TG service agent 450 requesting that throughput guidance be removed as a service provided to the user, radio access bearers, or flows associated with the user equipment that handed over to the target access element 420. For example, the message can be an HTTPS POST message that includes tunnel identifiers of the radio access bearers. The TG service agent 450 can inform one or more impacted applications that the TG service has been discontinued in response to handover of the user equipment. For example, the TG service agent 450 can tear down connections used to support out-of-band reporting of the throughput guidance to one or more application servers.

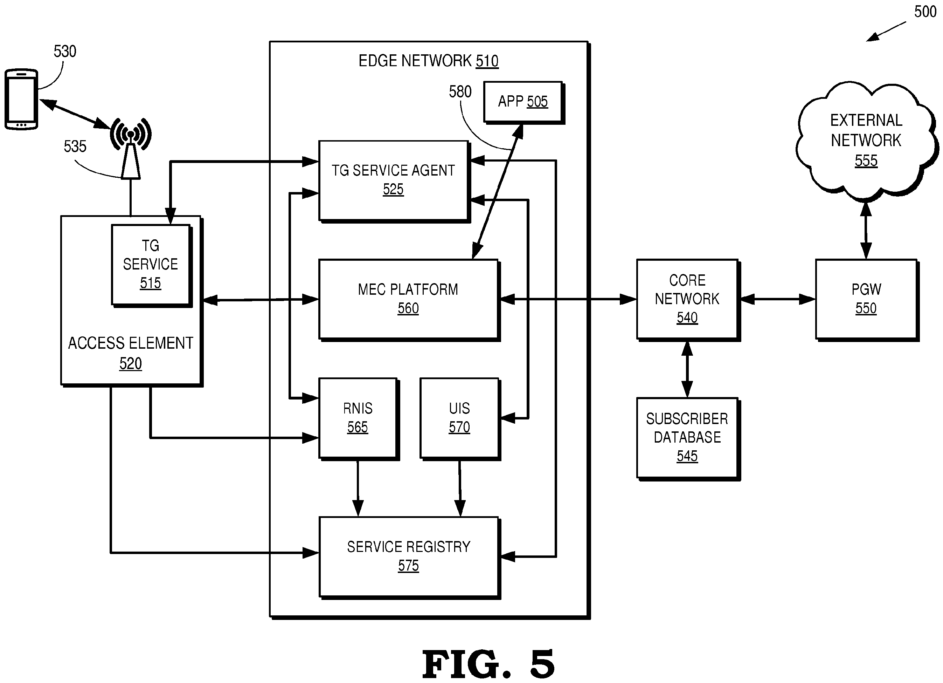

FIG. 5 is a block diagram of a wireless communication system 500 that implements an application 505 that is hosted in an edge network 510 according to some embodiments. The application 505 utilizes throughput guidance provided by a TG service 515 implemented in an access element 520 and a TG service agent 525 implemented in the edge network 510. Although the description of FIG. 5 uses throughput guidance as an example of an edge service that can be utilized by the application 505, the description applies equally to other edge services that can be implemented in the access element 520. The wireless communication system 500 provides wireless connectivity to one or more user equipment 530 within a geographical area or cell that is served by the access element 520 via one or more antennas 535, which can be disposed proximate to or at a distance from the access element 520, *e.g.,* as one or more remote radio heads.

The wireless communication system 500 also includes a core network 540, a subscriber database 545, and a PGW 550 that provides a gateway to an external network 555 such as the Internet. The access element 520 communicates with the core network 540 via the edge network 510, which implements the TG service agent 525, an MEC platform 560, an RNIS 565, a UIS 570, and a service registry 575. These entities operate in the manner disclosed herein with regard to corresponding entities in the wireless communication system 200 shown in FIG. 2 and the wireless communication system 400 shown in FIG. 4. However, since the application 505 is hosted by the edge network 510, the enriched uplink traffic, *e.g*., uplink packets that include headers that encode values of the throughput guidance computed by the TG service 515, is offloaded by the MEC platform 560 to the application 505. For example, a user plane function implemented in the MEC platform 560 can offload the enriched user plane traffic to the application 505, as indicated by the arrow 580.

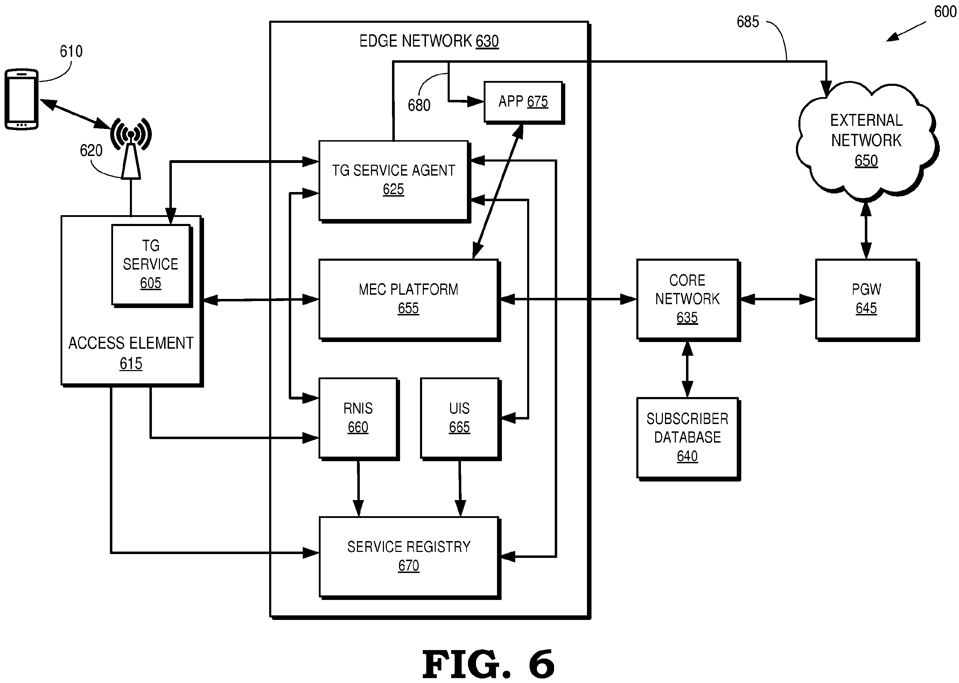

FIG. 6 is a block diagram of a wireless communication system 600 that implements out-of-band reporting of throughput guidance according to some embodiments. Although the description of FIG. 6 uses throughput guidance provided by a TG service 605 as an example of an edge service, the description applies equally to other edge services. The wireless communication system 600 provides wireless connectivity to one or more user equipment 610 within a geographical area or cell that is served by an access element 615 via one or more antennas 620, which can be disposed proximate to or at a distance from the access element 615, *e.g.,* as one or more remote radio heads. The access element 615 also hosts the TG service 605 so that the TG service 605 has access to layer 1 and layer 2 parameters, as discussed herein. The TG service 605 is configured by a TG service agent 625 and the TG service 605 provides reports including throughput guidance to the TG service agent 625. The TG service agent 625 is implemented in an edge network 630.

The wireless communication system 600 also includes a core network 635, a subscriber database 640, and a PGW 645 that provides a gateway to an external network 650 such as the Internet. The access element 615 communicates with the core network 635 via the edge network 630, which implements the TG service agent 625, an MEC platform 655, an RNIS 660, a UIS 665, and a service registry 670. These entities operate in the manner disclosed herein with regard to corresponding entities in the wireless communication system 200 shown in FIG. 2, the wireless communication system 400 shown in FIG. 4, and the wireless communication system 500 shown in FIG. 5. In the illustrated embodiment, the edge network 630 hosts one or more applications 675 that utilize throughput guidance provided by the TG service 605. Applications can also be provided via the external network 650 or the applications can be implemented in the external network 650. For example, authorized applications or analytics servers can be hosted in the Internet.

The TG service 605 is configured for out-of-band reporting of values of throughput guidance that are utilized by the application 675 or one or more applications associated with the external network 650. Instead of enriching uplink packets by incorporating information that represents the value of throughput guidance, the TG service 605 reports values of throughput guidance to the TG service agent 625, which is configured to forward the values of the throughput guidance. For example, the TG service agent 625 can forward throughput guidance to the application 675, as indicated by the arrow 680. For another example, the TG service agent 625 can forward throughput guidance to applications via the external network 650, as indicated by the arrow 685. The TG service agent 625 can also forward other information associated with the throughput guidance generated by the TG service 605. The out-of-band reporting illustrated in FIG. 6 can be implemented instead of in-band reporting or in addition to in-band reporting.

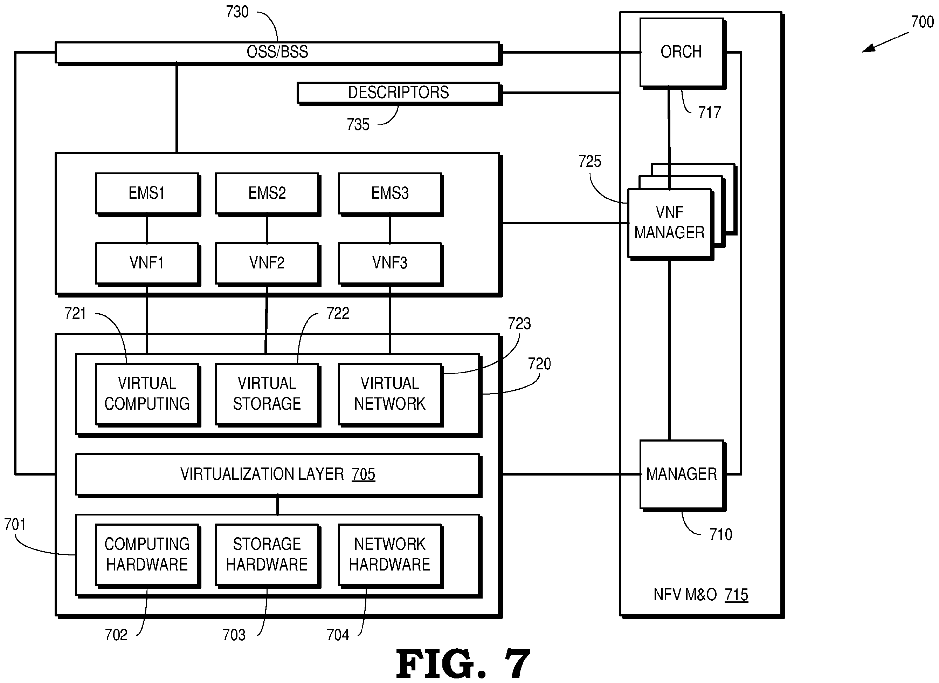

FIG. 7 is a block diagram of an NFV architecture 700 according to some embodiments. The NFV architecture 700 is used to implement some embodiments of the wireless communication systems 100, 200, 400, 500, 600 shown in FIGs 1, 2, and 4-6. The NFV architecture 700 includes hardware resources 701 including computing hardware 702 such as one or more processors, storage hardware 703 such as one or more memories, and network hardware 704 such as one or more transmitters, receivers, or transceivers. A virtualization layer 705 provides an abstract representation of the hardware resources 701. The abstract representation supported by the virtualization layer 705 can be managed using a virtualized infrastructure manager 710, which is part of the NFV management and orchestration (M&O) module 715. Some embodiments of the manager 710 are configured to collect and forward performance measurements and events that may occur in the NFV architecture 700. For example, performance measurements may be forwarded to an orchestrator (ORCH) 717 implemented in the NFV M&O 715. The hardware resources 701 and the virtualization layer 705 are used to implement virtual resources 720 including virtual computing resources 721, virtual storage resources 722, and virtual networking resources 723.

Virtual networking functions (VNF1, VNF2, VNF3) run over the NFV infrastructure (e.g., the hardware resources 701) and utilize the virtual resources 720. For example, the virtual networking functions (VNF1, VNF2, VNF3) can be implemented using virtual machines supported by the virtual computing resources 721, virtual memory supported by the virtual storage resources 722, or virtual networks supported by the virtual network resources 723. Element management systems (EMS1, EMS2, EMS3) are responsible for managing the virtual networking functions (VNF1, VNF2, VNF3). For example, the element management systems (EMS1, EMS2, EMS3) may be responsible for fault and performance management. In some embodiments, each of the virtual networking functions (VNF1, VNF2, VNF3) is controlled by a corresponding VNF manager 725 that exchanges information and coordinates actions with the manager 710 or the orchestrator 717.

The NFV architecture 700 may include an operation support system (OSS)/business support system (BSS) 730. The OSS/BSS 730 deals with network management including fault management using the OSS functionality. The OSS/BSS 730 also deals with customer and product management using the BSS functionality. Some embodiments of the NFV architecture 700 use a set of descriptors 735 for storing descriptions of services, virtual network functions, or infrastructure supported by the NFV architecture 700. Information in the descriptors 735 may be updated or modified by the NFV M&O 715.

Embodiments of the wireless communication systems that implement edge services in access elements, such as the wireless communication systems 100, 200, 400, 500, 600 shown in FIGs 1, 2, and 4-6, have a number of advantages over the conventional practice of implementing edge services in edge networks. Implementing the edge service in the access element allows the edge service to calculate service results on the basis of values of radio conditions, layer 1 parameters, and layer 2 parameters that are available in real time at the access element. The service results can therefore be calculated at higher levels of accuracy and in a timely manner. Providing service-specific information in a transparent container as part of hand off preparation procedures allows the wireless communication system to provide the edge service without any interruption during handover between access elements, which improves the overall user experience. Discovering edge services by querying a service registry based on a service-specific query parameter (such as a cell identifier) allows an edge service agent implemented at an aggregation point (such as the edge network) to quickly and accurately determine whether an edge service is available to provide the requested service. In wireless communication systems that operate according to LTE, service computations such as throughput guidance can be performed in access elements such as eNodeBs so that there is no need for an MEC platform to be implemented in the path of all of the uplink or downlink for the edge service to determine throughput levels. Consequently, only traffic offloaded to the edge network is sent via the MEC platform while other user plane traffic is transmitted directly to core elements, which can improve overall system performance and security.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments.

Benefits, other advantages, and solutions to problems have been described above with regard to specific embodiments. No limitations are intended to the details of construction or design herein shown, other than as described in the claims below. Accordingly, the protection sought herein is as set forth in the claims below.

## Claims

1. A method for controlling an edge service (205) generating service results based on at least one of a layer 1 parameter and a layer 2 parameter available at a first radio access element (210), and comprising:
determining, at an edge service agent (270) implemented external to the first radio access element, whether at least one of a specific user, a specific radio access bearer associated with the user, or a specific flow associated with the radio access bearer is qualified to receive an edge service implemented in the first radio access element;
discovering, using information from a service registry, availability of the edge service in response to determining that the at least one of the user, the radio access bearer, or the flow is qualified for the edge service; and
transmitting, from the edge service agent, a message including information indicative of the user, bearer, or flow to the first radio access element to activate the edge service at the first radio access element.

2. The method of claim 1, wherein determining whether the at least one of the user, the radio access bearer, or the flow is qualified for the edge service comprises determining whether the at least one of the user, the radio access bearer, or the flow qualifies for the service based on at least one of an international mobile subscriber identity, an identifier of the radio access bearer, an IP address of an endpoint of the flow, or an indication of a 5-tuple comprising information indicating a source IP subnet, a destination IP subnet, a protocol, a source port range, a destination port range, and a type of service/differential services code point.

3. The method of claim 1 or 2, wherein discovering the edge service comprises querying a service registry that stores discovery criteria for the edge service.

4. The method of any of claims 1 to 3, wherein transmitting the message that activates the edge service comprises transmitting configuration parameters for providing the edge service.

5. The method of any of claims 1 to 4, further comprising:
receiving, at the edge service agent, a service result from the edge service implemented in the first radio access element.

6. The method of any of claims 1 to 5, further comprising:
receiving, at a second radio access element, a notification indicating that a user equipment receiving the edge service is handing over from the first radio access element to the second radio access element; and
receiving, at the edge service agent, service results from the edge service implemented in the second radio access element.

7. The method of any of claims 1 to 6, further comprising:
receiving, from the first radio access element, a request that the edge service be removed as a service provided to the at least one of the user, the radio access bearer, or the flow; and
removing the edge service in response to receiving the request.

8. An apparatus for controlling an edge service (205) generating service results based on at least one of a layer 1 parameter or a layer 2 parameter available at a first radio access element (210), where the first radio access element (210) is external to the apparatus, and comprising:
at least one processor configured to implement an edge service agent (270), wherein the edge service agent is configured to determine whether at least one of a specific user, a specific radio access bearer associated with the user, or a specific flow associated with the radio access bearer is qualified to receive an edge service implemented in the first radio access element, and wherein the edge service agent is configured to discover, using information from a service registry, availability of the edge service in response to determining that the at least one of the user, the radio access bearer, or the flow is qualified for the edge service; and
at least one transmitter configured to transmit a message including information indicative of the user, bearer, or flow to the first radio access element to activate the edge service at the first radio access element.

9. The apparatus of claim 8, wherein the edge service agent is configured to determine whether the at least one of the user, the radio access bearer, or the flow qualifies for the service based on at least one of an international mobile subscriber identity, an identifier of the radio access bearer, an IP address of an endpoint of the flow, or an indication of a 5-tuple comprising information indicating a source IP subnet, a destination IP subnet, a protocol, a source port range, a destination port range, and a type of service/differential services code point.

10. The apparatus of claim 8 or 9, further comprising:
at least one memory configured to implement a service registry, wherein the at least one processor is configured to query the service registry that stores discovery criteria for the edge service.

11. The apparatus of any of claims 8 to 10, wherein the at least one transmitter is configured to transmit configuration parameters for providing the edge service.

12. The apparatus of any of claims 8 to 11, further comprising:
a receiver configured to receive a service result from the edge service implemented in the first radio access element.

13. The apparatus of any of claims 8 to 12, wherein the receiver is configured to:
receive a notification indicating that a user equipment receiving the edge service is handing over from the first radio access element to a second radio access element; and
receive service results from the edge service implemented in the second radio access element.

14. The apparatus of any of claims 8 to 13, wherein the receiver is configured to receive, from the first radio access element, a request that the edge service be removed as a service provided to the at least one of the user, the radio access bearer, or the flow, and wherein the at least one processor is configured to remove the edge service in response to receiving the request.

## Patentansprüche

1. Verfahren zum Steuern eines Edge-Dienstes (205), der mindestens auf Basis eines Schicht-1-Parameters und eines Schicht-2-Parameters, die an einem ersten Funkzugangselement (210) verfügbar sind, Dienstergebnisse erzeugt, das Folgendes umfasst:
Bestimmen an einem Edge-Dienstagenten (270), ob mindestens einer von einem spezifischen Benutzer, einem spezifischen Funkzugangsträger, der mit dem Benutzer verknüpft ist, oder einem spezifischen Strom, der mit dem Funkzugangsträger verknüpft ist, zum Empfangen eines Edge-Dienstes, der im ersten Funkzugangselement implementiert wird, qualifiziert ist;
Entdecken, einer Verfügbarkeit des Edge-Dienstes in Reaktion auf das Bestimmen, dass mindestens einer des Benutzers, des Funkzugangsträgers oder des Stroms für den Edge-Dienst qualifiziert ist, unter Verwendung von Informationen aus einem Dienstregister; und
Übertragen einer Nachricht, die Informationen beinhaltet, die den Benutzer, den Träger oder den Strom anzeigen, vom Edge-Dienstagent zum ersten Funkzugangselement, um den Edge-Dienst am ersten Funkzugangselement zu aktivieren.

2. Verfahren nach Anspruch 1, wobei das Bestimmen, ob der mindestens eine des Benutzers, des Funkzugangsträgers oder des Stroms für den Edge-Dienst qualifiziert ist, das Bestimmen, ob der mindestens eine des Benutzers, des Funkzugangsträgers oder des Stroms für den Dienst qualifiziert ist, mindestens teilweise auf Basis einer internationalen Mobilteilnehmeridentität, einer Kennung des Funkzugangsträgers, einer IP-Adresse eines Endpunkts des Stroms oder einer Anzeige eines 5-Tupels, die Informationen umfassen, die ein Quell-IP-Unternetz, ein Ziel-IP-Unternetz, ein Protokoll, einen Quellanschlussbereich, einen Zielanschlussbereich und einen Type-of-Service-/Differential-Services-Codepunkt anzeigen, umfasst.

3. Verfahren nach Anspruch 1 oder 2, wobei das Entdecken des Edge-Dienstes das Abfragen eines Dienstregisters, das Entdeckungskriterien für den Edge-Dienst speichert, umfasst.

4. Verfahren nach einem der Ansprüche 1 bis 3, wobei das Übertragen der Nachricht, die den Edge-Dienst aktiviert, das Übertragen von Auslegungsparametern zum Bereitstellen des Edge-Dienstes umfasst.

5. Verfahren nach einem der Ansprüche 1 bis 4, das ferner Folgendes umfasst:
Empfangen eines Dienstergebnisses am Edge-Dienstagent vom Edge-Dienst, der im ersten Funkzugangselement implementiert wird.

6. Verfahren nach einem der Ansprüche 1 bis 5, das ferner Folgendes umfasst:
Empfangen einer Benachrichtigung, die anzeigt, dass eine Teilnehmereinrichtung, die den Edge-Dienst empfängt, vom ersten Funkzugangselement zum zweiten Funkzugangselement übergibt, an einem zweiten Funkzugangselement; und
Empfangen von Dienstergebnissen am Edge-Dienstagent vom Edge-Dienst, der im zweiten Funkzugangselement implementiert wird.

7. Verfahren nach einem der Ansprüche 1 bis 6, das ferner Folgendes umfasst:
Empfangen einer Anforderung zum Entfernen des Edge-Dienstes als einen Dienst, der dem mindestens einen des Benutzers, des Funkzugangsträgers oder des Stroms bereitgestellt wird, vom ersten Funkzugangselement; und
Entfernen des Edge-Dienstes in Reaktion auf das Empfangen der Anforderung.

8. Vorrichtung zum Steuern eines Edge-Dienstes (205), der mindestens auf Basis eines Schicht-1-Parameters oder eines Schicht-2-Parameters, die an einem ersten Funkzugangselement (210) verfügbar sind, Dienstergebnisse erzeugt, wo sich das erste Funkzugangselement (210) außerhalb der Vorrichtung befindet, die Folgendes umfasst:
mindestens einen Prozessor, der dazu ausgelegt ist, einen Edge-Dienstagenten (270) zu implementieren, wobei der Edge-Dienstagent dazu ausgelegt ist zu bestimmen, ob mindestens einer von einem spezifischen Benutzer, einem spezifischen Funkzugangsträger, der mit dem Benutzer verknüpft ist, oder einem spezifischen Strom, der mit dem Funkzugangsträger verknüpft ist, zum Empfangen eines Edge-Dienstes, der im ersten Funkzugangselement implementiert wird, qualifiziert ist, und wobei der Edge-Dienstagent dazu ausgelegt ist, in Reaktion auf das Bestimmen, dass der mindestens eine des Benutzers, des Funkzugangsträgers oder des Stroms für den Edge-Dienst qualifiziert ist, unter Verwendung von Informationen aus einem Dienstregister eine Verfügbarkeit des Edge-Dienstes zu entdecken; und
mindestens einen Sender, der dazu ausgelegt ist, eine Nachricht zu übertragen, die Informationen beinhaltet, die den Benutzer, den Träger oder den Strom anzeigen, vom Edge-Dienstagent zum ersten Funkzugangselement, um den Edge-Dienst am ersten Funkzugangselement zu aktivieren.

9. Vorrichtung nach Anspruch 8, wobei der Edge-Dienstagent dazu ausgelegt ist, mindestens teilweise auf Basis einer internationalen Mobilteilnehmeridentität, einer Kennung des Funkzugangsträgers, einer IP-Adresse eines Endpunkts des Stroms oder einer Anzeige eines 5-Tupels, die Informationen umfassen, die ein Quell-IP-Unternetz, ein Ziel-IP-Unternetz, ein Protokoll, einen Quellanschlussbereich, einen Zielanschlussbereich und einen Type-of-Service-/Differential-Services-Codepunkt anzeigen, zu bestimmen, ob der mindestens eine des Benutzers, des Funkzugangsträgers oder des Stroms für den Dienst qualifiziert ist.

10. Vorrichtung nach Anspruch 8 oder 9, die ferner Folgendes umfasst:
mindestens einen Speicher, der dazu ausgelegt ist, ein Dienstregister zu implementieren, wobei der mindestens eine Prozessor dazu ausgelegt ist, das Dienstregister, in dem Entdeckungskriterien für den Edge-Dienst gespeichert sind, abzufragen.

11. Vorrichtung nach einem der Ansprüche 8 bis 10, wobei der mindestens eine Sender dazu ausgelegt ist, Auslegungsparameter zum Bereitstellen des Edge-Dienstes zu übertragen.

12. Vorrichtung nach einem der Ansprüche 8 bis 11, die ferner Folgendes umfasst:
einen Empfänger, der dazu ausgelegt ist, ein Dienstergebnis vom Edge-Dienst, der im ersten Funkzugangselement implementiert wird, zu empfangen.

13. Vorrichtung nach einem der Ansprüche 8 bis 12, wobei der Empfänger zu Folgendem ausgelegt ist:
Empfangen einer Benachrichtigung, die anzeigt, dass eine Teilnehmereinrichtung, die den Edge-Dienst empfängt, vom ersten Funkzugangselement zu einem zweiten Funkzugangselement übergibt, und
Empfangen von Dienstergebnissen vom Edge-Dienst, der im zweiten Funkzugangselement implementiert wird.

14. Vorrichtung nach einem der Ansprüche 8 bis 13, wobei der Empfänger dazu ausgelegt ist, eine Anforderung zum Entfernen des Edge-Dienstes als einen Dienst, der dem mindestens einen des Benutzers, des Funkzugangsträgers oder des Stroms bereitgestellt wird, vom ersten Funkzugangselement zu entfernen, und wobei der mindestens eine Prozessor dazu ausgelegt ist, den Edge-Dienst in Reaktion auf das Empfangen der Anforderung zu entfernen.

## Revendications

1. Procédé pour commander un service périphérique (205) générant des résultats de service sur la base d'au moins l'un parmi un paramètre de couche 1 et un paramètre de couche 2 disponibles au niveau d'un premier élément d'accès radio (210), et comprenant les étapes consistant à :
déterminer, au niveau d'un agent de service périphérique (270) mis en œuvre à l'extérieur du premier élément d'accès radio, si au moins l'un parmi un utilisateur spécifique, un support d'accès radio spécifique associé à l'utilisateur, ou un flux spécifique associé au support d'accès radio est qualifié pour recevoir un service périphérique mis en œuvre dans le premier élément d'accès radio ;
découvrir en utilisant des informations provenant d'un registre de service, la disponibilité du service périphérique en réponse à la détermination du fait qu'au moins l'un parmi l'utilisateur, le support d'accès radio, ou le flux est qualifié pour le service périphérique ; et
transmettre, à partir de l'agent de service périphérique, un message comportant des informations indicatives de l'utilisateur, du support ou du flux au premier élément d'accès radio pour activer le service périphérique au niveau du premier élément d'accès radio.

2. Procédé de la revendication 1, dans lequel le fait de déterminer si l'au moins un parmi l'utilisateur, le support d'accès radio, ou le flux est qualifié pour le service périphérique comprend le fait de déterminer si l'au moins un parmi l'utilisateur, le support d'accès radio, ou le flux est qualifié pour le service sur la base d'au moins l'un parmi une identité d'abonné mobile internationale, un identifiant du support d'accès radio, une adresse IP d'un point d'extrémité du flux, ou une indication d'un quintuplé comprenant des informations indiquant un sous-réseau IP source, un sous-réseau IP de destination, un protocole, une plage de ports source, une plage de ports de destination, et un point de code de type de service/de services différentiels.

3. Procédé de la revendication 1 ou 2, dans lequel la découverte du service périphérique comprend l'interrogation d'un registre de service qui stocke des critères de découverte pour le service périphérique.

4. Procédé de l'une quelconque des revendications 1 à 3, dans lequel la transmission du message qui active le service périphérique comprend la transmission de paramètres de configuration pour fournir le service périphérique.

5. Procédé de l'une quelconque des revendications 1 à 4, comprenant en outre l'étape consistant à :
recevoir, au niveau de l'agent de service périphérique, un résultat de service à partir du service périphérique mis en œuvre dans le premier élément d'accès radio.

6. Procédé de l'une quelconque des revendications 1 à 5, comprenant en outre les étapes consistant à :
recevoir, au niveau d'un deuxième élément d'accès radio, une notification indiquant qu'un équipement d'utilisateur recevant le service périphérique passe du premier élément d'accès radio au deuxième élément d'accès radio ; et
recevoir, au niveau de l'agent de service périphérique, des résultats de service à partir du service périphérique mis en œuvre dans le deuxième élément d'accès radio.

7. Procédé de l'une quelconque des revendications 1 à 6, comprenant en outre les étapes consistant à :
recevoir, à partir du premier élément d'accès radio, une demande de suppression du service périphérique en tant que service fourni à l'au moins un parmi l'utilisateur, le support d'accès radio, ou le flux ; et
supprimer le service périphérique en réponse à la réception de la demande.

8. Appareil pour commander un service périphérique (205) générant des résultats de service sur la base d'au moins l'un parmi un paramètre de couche 1 ou un paramètre de couche 2 disponibles au niveau d'un premier élément d'accès radio (210), où le premier élément d'accès radio (210) est extérieur à l'appareil, et comprenant :
au moins un processeur configuré pour mettre en œuvre un agent de service périphérique (270), dans lequel l'agent de service périphérique est configuré pour déterminer si au moins l'un parmi un utilisateur spécifique, un support d'accès radio spécifique associé à l'utilisateur, ou un flux spécifique associé au support d'accès radio est qualifié pour recevoir un service périphérique mis en œuvre dans le premier élément d'accès radio, et dans lequel l'agent de service périphérique est configuré pour découvrir, en utilisant des informations provenant d'un registre de service, la disponibilité du service périphérique en réponse à la détermination du fait qu'au moins l'un parmi l'utilisateur, le support d'accès radio, ou le flux est qualifié pour le service périphérique ; et
au moins un émetteur configuré pour transmettre un message comportant des informations indicatives de l'utilisateur, le support ou le flux au premier élément d'accès radio pour activer le service périphérique au niveau du premier élément d'accès radio.

9. Appareil de la revendication 8, dans lequel l'agent de service périphérique est configuré pour déterminer si l'au moins un parmi l'utilisateur, le support d'accès radio, ou le flux est qualifié pour le service sur la base d'au moins l'un parmi une identité d'abonné mobile internationale, un identifiant du support d'accès radio, une adresse IP d'un point d'extrémité du flux, ou une indication d'un quintuplé comprenant des informations indiquant un sous-réseau IP source, un sous-réseau IP de destination, un protocole, une plage de ports source, une plage de ports de destination, et un point de code de type de service/de services différentiels.

10. Appareil de la revendication 8 ou 9, comprenant en outre :
au moins une mémoire configurée pour mettre en œuvre un registre de service, dans lequel l'au moins un processeur est configuré pour interroger le registre de service qui stocke des critères de découverte pour le service périphérique

11. Appareil de l'une quelconque des revendications 8 à 10, dans lequel l'au moins un émetteur est configuré pour transmettre des paramètres de configuration pour fournir le service périphérique.

12. Appareil de l'une quelconque des revendications 8 à 11, comprenant en outre :
un récepteur configuré pour recevoir un résultat de service à partir du service périphérique mis en œuvre dans le premier élément d'accès radio.

13. Appareil de l'une quelconque des revendications 8 à 12, dans lequel le récepteur est configuré pour :
recevoir une notification indiquant qu'un équipement d'utilisateur recevant le service périphérique passe du premier élément d'accès radio à un deuxième élément d'accès radio ; et
recevoir des résultats de service à partir du service périphérique mis en œuvre dans le deuxième élément d'accès radio.

14. Appareil de l'une quelconque des revendications 8 à 13, dans lequel le récepteur est configuré pour recevoir, à partir du premier élément d'accès radio, une demande de suppression du service périphérique en tant que service fourni à l'au moins un parmi l'utilisateur, le support d'accès radio, ou le flux ; et dans lequel l'au moins un processeur est configuré pour supprimer le service périphérique en réponse à la réception de la demande.
